# EUROPEAN PATENT APPLICATION

(11) **EP 2 426 973 A1**
(43) Date of publication of application: **07.03.2012**
(21) Application number: 10769669.2
(22) Date of filing: 22.04.2010
(51) Int. Cl.: H04W 16/14, H04J 1/00, H04J 11/00, H04W 48/10, H04W 72/04

(54) **USER DEVICE, BASE STATION DEVICE, AND COMMUNICATION CONTROL METHOD**

(30) Priority: 27.04.2009 JP 2009108376; 15.02.2010 JP 2010030748
(71) Applicant: NTT DOCOMO, INC., Chiyoda-ku Tokyo 100-6150 (JP)
(72) Inventor: ISHII, Hiroyuki, Tokyo 100-6150 (JP)
(74) Representative: HOFFMANN EITLE
(86) International application number: PCT/JP2010/057172
(87) International publication number: WO 2010/125970

(57) **Abstract**

A radio base station according to the present invention comprising : a user equipment configured to execute radio communication with a base station device in a mobile communication system comprising, a control signal reception unit configured to receive a control signal instructing transmission of an uplink signal and an uplink signal transmission unit configured to transmit an uplink signal to the base station device based on the control signal, the uplink signal transmission unit is configured not to transmit the uplink signal when the information contained in the control signal matches predetermined details.

## Description

### TECHNICAL FIELD

The present invention relates to the technical field of a mobile communication, and in particular, relates to a user equipment in a mobile communication system using a next-generation mobile communication technique, a base station device, and a communication control method.

### BACKGROUND ART

In recent years, a long term evolution (LTE) scheme is being examined by the 3GPP, which is a group aiming to standardize WCDMA, such as a next-generation communication scheme for wideband code division multiplexing access (WCDMA) schemes, high-speed downlink pcket access (HSDPA) schemes, and high-speed uplink pcket access (HSDPA) schemes, and efforts towards standardization is progressing in0 that regard.

A specification for an LTE radio access scheme uses an orthogonal frequency division multiplexing access (OFDMA) scheme for the downlink, and a single-carrier frequency division multiple access (SC-FDMA) scheme for the uplink.

An OFDMA scheme is a multicarrier transmission scheme that divides a frequency band into a plurality of narrow frequency bands (sub-carriers), and executes transmission by loading data onto each sub-carrier. An OFDMA scheme is expected to increase the use efficiency of frequencies and realize high-rate transmission by orthogonal close alignment of the sub-carriers on the frequency axis.

The SC-FDMA scheme is a single carrier transmission scheme that divides a frequency band with respect to respective terminals and executes transmission using a different frequency band in the plurality of terminals. Since the SC-FDMA scheme is associated with low fluctuation of transmission power in addition to enabling a simple and effective reduction in interference between terminals, the SC-FDMA scheme is preferred in view of enhanced coverage and terminal power consumption efficiency.

An LTE scheme executes communication by assignment of at least one resource block (RB) to a mobile station in relation to both an uplink and a downlink.

The base station device determines to which mobile station a resource block is assigned from a plurality of mobile stations in each subframe (in an LTE scheme, 1 ms) (this process is termed "scheduling").

In a downlink, the base station device transmits a shared channel signal using at least one resource block with respect to a mobile station that is selected during scheduling, and in an uplink, the mobile station selected during scheduling transmits a shared channel signal using at least one resource block with respect to a base station device.

The shared channel signal in an uplink is a signal on PUSCH (Physical Uplink Shared Channel), and in a downlink, it is a signal on PDSCH (Physical Downlink Shared Channel).

An LTE-advanced scheme is being examined by 3GPP as a communication scheme as the successor to LTE schemes.

There is a consensus that the required condition for LTE-advanced schemes is execution of "carrier aggregation". As used herein, "carrier aggregation" means execution of communication simultaneously by a plurality of carriers.

For example, when "carrier aggregation" is executed in an uplink, the mobile station transmits the uplink signal by using a plurality of carriers because of transmitting by using a carrier that is different for each "component carrier". In addition, execution of multicarrier transmission is being considered in relation to a single "component carrier".

Multicarrier transmission means executing at least two single carrier transmissions at the same time.

For example, in a component carrier configured by 100 resource blocks, when single carrier transmission is executed using 20 resource blocks, single carrier transmission is regarded. However, when two single carrier transmissions with the above 20 resource blocks are executed at the same time, a multicarrier transmission results.

The latter enables transmission using a total of 40 resource blocks by UE in a system band configured by 100 resource blocks. Furthermore, it is regarded that the latter will also enable multicarrier transmission when single carriers configured by the 20 resource blocks are adjacent.

In the above example, although there is only one component carrier, multicarrier transmission is also regarded when existing two or more component carriers and a plurality of single carrier transmissions are executed simultaneously in the two or more component carriers.

However, a mobile telephone system using radio waves, radio astronomy systems, satellite communication systems, aviation or maritime radar systems, earth resources survey systems, or wireless LAN systems generally separate the frequency bands that are used in order to prevent mutual interference. For example, the frequency bands assigned to a mobile telephone system include frequency bands assigned for use in a plurality of systems, and the frequency band for each system is separated.

In other words, a system using radio waves prevents interference between systems by separating the frequency bands that it uses.

However, a plurality of systems in an adjacent configuration will cause mutual interference even when the frequency bands are separated since a transmitter that emits radio waves emits unnecessary waves (hereinafter termed adjacent channel interference) in a band that is outside of the frequency band for its own system. When the power level of the unnecessary wave is large, there will be a considerable adverse effect on the adjacent system.

Performance standards are regulated in relation to characteristics for spurious emissions or adjacent channel interference as described above for each system in order to prevent adverse effects on an adjacent system due to the above type of adjacent channel interference.

However, the mobile station must include a high-linearity power amplifier (power amp) to suppress unnecessary waves in a band that is outside of the frequency band for its own system as described above.

Consequently, when the cost or size of the mobile station is a consideration, difficulty may be encountered in reducing unnecessary waves as described above or in meeting standards in relation to spurious emissions or adjacent channel interference as described above.

Reducing the maximum transmission power in this way is termed "maximum power reduction (MPR)". For example, in an LTE scheme, MPR is defined by reference to the resource block number, the system bandwidth, and the modulation method. Reducing the maximum transmission power in this manner enables a large reduction in the cost or size of the mobile station.

### SUMMARY OF THE INVENTION

### PROBLEMS TO BE SOLVED BY THE INVENTION

However, a conventional mobile communication system described above is associated with the following problems.

As described above, "carrier aggregation" is executed in an LTE-advanced scheme. However, in an uplink, when an uplink signal is transmitted by a plurality of carriers, "intermodulation products (hereinafter termed "IM products")" are produced, and these "IM products" cause interference with other systems.

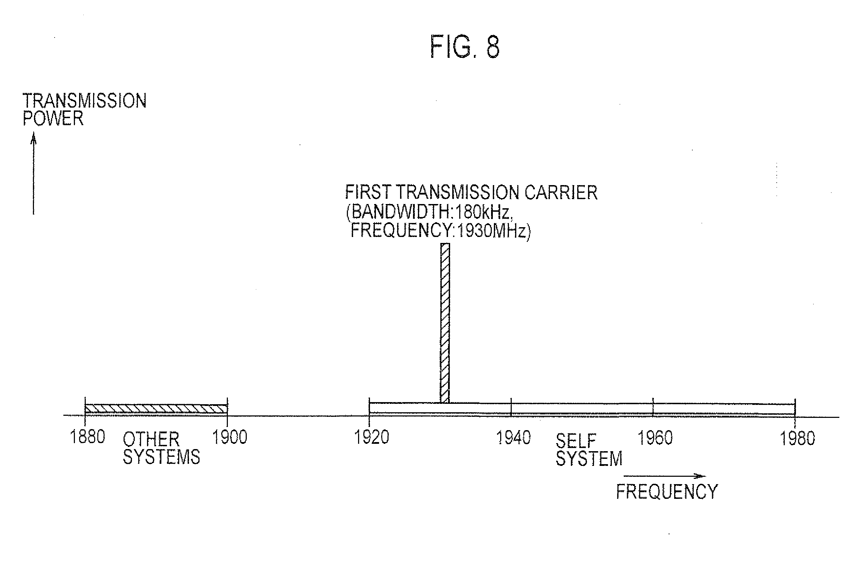

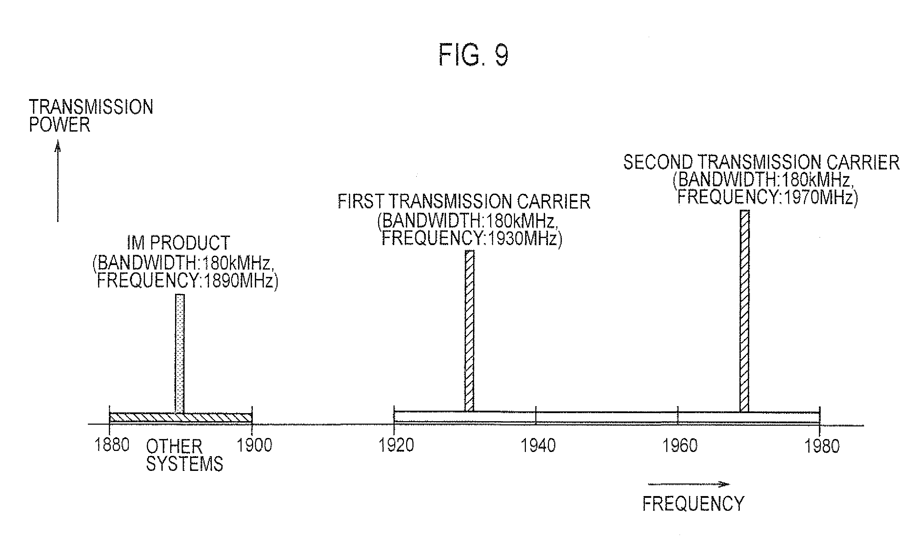

An example will be described below of the occurrence of interference by "IM products" with another system making reference to Fig. 8 and Fig. 9.

In Fig. 8 and Fig. 9, the bandwidth of one transmission carrier is assumed to be "180kHz". Furthermore, it is assumed that the system bandwidth of the self system is "1920 MHz" to "1980 MHz", and that the system bandwidth of the system subjected to interference (another system) is "1880 MHz" to "1890 MHz".

In Fig. 8, "IM products" are not produced since single carrier transmission is executed in the self system.

Furthermore, the interference with the adjacent channel is generally said to be produced in a domain 2.5 times the transmission bandwidth, and when the transmission bandwidth is "180 kHz", interference is produced in a portion of 360 kHz at the both sides of the transmission band.

This means that there is absolutely no problem in relation to interference when it is considered that "1930 MHz", that is the transmission signal frequency, is considerably separated from "1880 MHz" to "1890 MHz", that is the system band of the system subjected to interference (another system).

On the other hand, as illustrated in Fig. 9, "IM products" resulting from the first transmission carrier and the second transmission carrier are produced in the vicinity of the "1890 MHz" frequency since multicarrier transmission is performed in the self system.

Therefore, significant interference is produced in the system subjected to interference (another system) that has a system band of "1880 MHz" to "1890 MHz".

Generally, the power density is reduced when the transmission bandwidth increases since the transmission power of the user equipment is limited.

Furthermore, in relation to the system subjected to interference, the power per interference signal band, that is to say, the power density affects whether or not there is an effect on the operation of the system.

Therefore, the interference effect due to "IM products" as described above largely depends on the bandwidth of each transmission carrier when executing multicarrier transmission.

Therefore, in light of the above problems, it is an object of the present invention to provide a user equipment, a base station device, and a communication control method that realize an increase effect on transmission characteristics when using multicarrier transmission while reducing the interference with another system by the provision of a limitation on the conditions for executing multicarrier transmission.

### MEANS FOR SOLVING THE PROBLEMS

The first feature of the present invention is summarized in that a user equipment configured to execute radio communication with a base station device in a mobile communication system comprising, a control signal reception unit configured to receive a control signal instructing transmission of an uplink signal and an uplink signal transmission unit configured to transmit an uplink signal to the base station device based on the control signal, the uplink signal transmission unit is configured not to transmit the uplink signal when the information contained in the control signal matches predetermined details.

The second feature of the present invention is summarized in that a base station device configured to execute radio communication with a user equipment in a mobile communication system comprising, a first transmission unit configured to transmit limitation information designating the configuration of an uplink signal that cannot be transmitted to the user equipment and a second transmission unit configured to transmit a control signal instructing transmission of the uplink signal.

The third feature of the present invention is summarized in that a communication control method configured to control radio communication between a base station device and a user equipment in a mobile communication system, the method comprising, a step A of receiving a control signal instructing transmission of an uplink signal and a step B of transmitting an uplink signal to the base station device based on the control signal, in the step B, the uplink signal is not transmitted when the information contained in the control signal matches predetermined details.

The fourth feature of the present invention is summarized in that a user equipment configured to execute radio communication with a base station device in a mobile communication system comprising, a control signal reception unit configured to receive a control signal instructing transmission of an uplink signal and an uplink signal transmission unit configured to transmit an uplink signal to the base station device based on the control signal, the uplink signal transmission unit is configured to transmit a part of the uplink signal when the information contained in the control signal matches predetermined details.

The fifth feature of the present invention is summarized in that a communication control method configured to control radio communication between a base station device and a user equipment in a mobile communication system, the method comprising, a step A of receiving a control signal instructing transmission of an uplink signal and a step B of transmitting an uplink signal to the base station device based on the control signal and in the step B, a part of the uplink signal is transmitted when the information contained in the control signal matches predetermined details.

### EFFECTS OF THE INVENTION

As has been described above, according to the present invention, it is possible to provide a user equipment, a base station device, and a communication control method that realize an increase effect on transmission characteristics when using multicarrier transmission while reducing the interference with another system by the provision of a limitation on the conditions for executing multicarrier transmission.

### BRIEF DESCRIPTION OF THE DRAWINGS

[Fig. 1] Fig. 1 is diagram illustrating the entire configuration of a mobile communication system according to a first embodiment of the present invention.
[Fig. 2] Fig. 2 is a functional block diagram of a base station device according to the first embodiment of the present invention.
[Fig. 3] Fig. 3 is a functional block diagram of a user equipment according to the first embodiment of the present invention.
[Fig. 4] Fig. 4 illustrates an example of information notified by limitation information in a mobile communication system according to the first embodiment of the present invention.
[Fig. 5] Fig. 5 illustrates an example of information notified by limitation information in a mobile communication system according to the first embodiment of the present invention.
[Fig. 6] Fig. 6 is a sequence diagram showing the operation of a mobile communication system according to the first embodiment of the present invention.
[Fig. 7] Fig. 7 is a sequence diagram showing the operation of a mobile communication system according to the first embodiment of the present invention.
[Fig. 8] Fig. 8 is a diagram illustrating a conventional mobile communication system.
[Fig. 9] Fig. 9 is a diagram illustrating a conventional mobile communication system.

### BEST MODES FOR CARRYING OUT THE INVENTION

### (Configuration of Mobile Communication System according to First Embodiment of Present Invention)

The mobile communication system according to a first embodiment of the present invention will be described below making reference to the figures. In all of the figures for describing the present embodiment, the same reference numerals are used in relation to the same function, and description thereof will not be repeated.

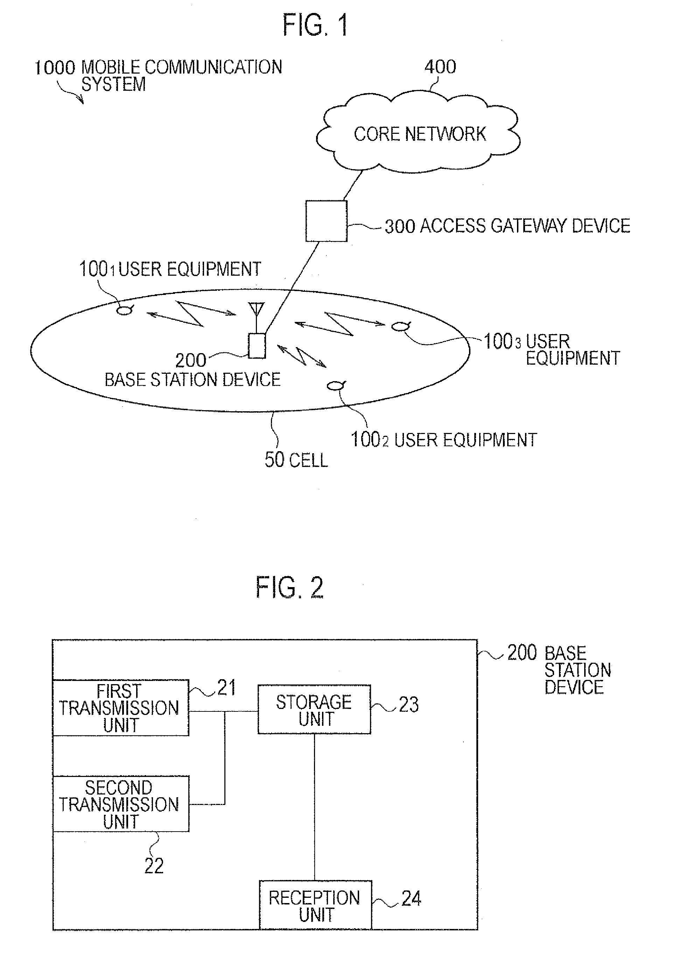

A mobile communication system having a user equipment 100n and a base station device 200 according to the present embodiment will be described making reference to Fig. 1.

The mobile communication system 1000, for example, is a system that applies an "Evolved UTRA and UTRAN (also termed "Long Term Evolution", or Super 3G") scheme or an LTE-advanced scheme.

The mobile communication system 1000 includes a base station device (eNB: eNodeB) 200 and a plurality of user equipments 100n (1001, 1002, 1003, ... 100n, wherein n is an integer such that n>0) that communicate with the base station device 200.

The base station device 200 is connected to a superior station, for example, an access gateway device 300. The access gateway device 300 is connected to a core network 400. The mobile station 100n executes communication with the base station device 200 in the cell 50 in an "Evolved UTRA and UTRAN" scheme. The access gateway device 300 may be termed MME/SGW (Mobility Management Entity/Serving Gateway).

Each user equipment (1001, 1002, 1003,...100n) has the same configuration, function, and condition, and therefore in the following description, in the absence of a specific indication to the contrary, the description will use the user equipment 100n. The user equipment (UE) executes radio communication with the base station device 200, and may be a mobile station, a mobile terminal, or a fixed terminal.

In the mobile communication system 1000, an "OFDMA (Orthogonal Frequency Division Multiplexing Access) scheme" is applied in a downlink, and an "SC-FDMA (Single Carrier Frequency Division Multiple Access) scheme" is applied in an uplink as a radio access scheme.

As described above, the OFDMA scheme is a multicarrier transmission scheme that divides a frequency band into a plurality of narrow frequency bands (sub-carriers), and executes communication by mapping data onto each sub-carrier. The SC-FDMA scheme is a single carrier transmission scheme that divides a frequency band to respective terminals and reduces interference between terminals by using respectively different frequency bands for the plurality of terminals.

There is a consensus that "carrier aggregation" is executed in an LTE-advanced scheme.

Communication is executed in a downlink using a plurality of "component carriers". As used herein, "component carrier" corresponds to one system carrier in an LTE scheme. That is to say, in an LTE scheme, although communication is executed using one "component carrier", in an LTE-advanced scheme, communication may be executed by two or more "components carriers".

Communication may be executed in an uplink using two or more "components carriers". Furthermore, although single carrier transmission is basically executed in an LTE scheme, in an LTE-advanced scheme, multicarrier transmission may be executed.

Multicarrier transmission may be multicarrier transmission formed by a plurality of "component carriers", or multicarrier transmission in one "component carrier", or multicarrier transmission formed in a plurality of "component carriers" and multicarrier transmission in one "component carrier".

In other words, this means that the resulting multicarrier transmission is executed by at least two single carrier transmissions at the same time. Furthermore, the resulting single carrier corresponds to a single carrier sent by single carrier frequency division multiple access (SC-FDMA) in LTE. Alternatively, the single carrier transmission corresponds to single carrier transmission by DFT-spread OFDM.

For example, in a component carrier configured by 100 resource blocks, single carrier transmission is regarded when executing single carrier transmission using 20 resource blocks. However, when two single carrier transmissions with the above 20 resource blocks are executed at the same time, a multicarrier transmission configuration results.

The latter enables transmission using a total of 40 resource blocks by UE in a system band configured by 100 resource blocks. Furthermore, it is regarded that the latter will also enable multicarrier transmission when single carriers configured by the 20 resource blocks are adjacent.

In the above example, although there is only one component carrier, multicarrier transmission is regarded when existing two or more component carriers and executing a plurality of single carrier transmissions simultaneously in the two or more component carriers.

A communication channel used in an "Evolved UTRA and UTRAN (LTE)" scheme will be described. The communication channel described below is used in an LTE-advanced scheme.

A "physical uplink control channel (PDCCH)" and a "physical downlink shared channel (PDSCH)" shared by each user equipment 100n are used in downlinks.

The physical downlink shared channel (PDSCH) enables user data, that is to say, normal data signals to be transmitted. The PDCCH enables notification of information related to the transport format of user data or the user ID for communication using PDSCH (that is to say, downlink scheduling information), or information related to the transport format of user data or the user ID for communication using the physical uplink shared channel (PUSCH) (that is to say, uplink scheduling grant).

PDCCH may be termed the "downlink L1/L2 control channel". The "downlink scheduling information" and the "uplink scheduling grant" may be globally termed "downlink control information (DCI)".

A "BCCH (Broadcast Control Channel)" is transmitted as a logical channel in the downlink.

A portion of the BCCH is mapped onto the "BCH (Broadcast Channel)" that is transport channel, and information mapped onto the BCH is transmitted to the user equipment 100n in the relevant cell by a "P-BCH (Physical Broadcast Channel)" that is the physical channel.

A portion of the BCCH is mapped onto the "DL-SCH (Downlink Shared Channel)" that is transport channel, and information mapped onto the DL-SCH is transmitted to the user equipment 100n in the relevant cell by "PDSCH" that is the physical channel.

The broadcast channel that is transmitted by BCCH/DL-SCH/PDSCH may be termed a dynamic broadcast channel (D-BCH).

PUSCH and PUCCH that are used and shared in each user equipment 100n are used in the uplink. The PUSCH transmits user data, that is to say, normal data signals.

PUCCH transmits downlink quality information (channel quality indicator (CQI)) and PDSCH transmission confirmation information (acknowledgement information) for use in an adaptive modulation and coding scheme (AMCS) and the PDSCH scheduling process.

The downlink quality information may be commonly referred to as CSI (Channel State Indicator) that includes CQI, PMI (Pre-Coding Matrix Indicator), and RI (Rank Indicator).

The details of the transmission confirmation information is expressed by either a positive response indicating suitable receipt of the transmitted signal (acknowledgement (ACK)) or a negative response showing that suitable receipt of the transmitted signal does not occur (negative acknowledgement (NACK)).

When the transmission timing of CQI or the transmission confirmation information is the same as the PUSCH transmission timing, the CQI or transmission confirmation information may be multiplexed and sent to PUSCH.

As illustrated in Fig. 2, the base station device 200 includes a first transmission unit 21, a second transmission unit 22, a storage unit 23, and a reception unit 24.

The first transmission unit 21 is configured to transmit limitation information, that designates the configuration of the uplink signals that cannot be transmitted, to the user equipment 100n.

For example, the first transmission unit 21 may be configured to transmit the limitation information to the user equipment 100n by an RRC message or by broadcast information.

The first transmission unit 21 may receive the limitation information that designates the configuration of the uplink signals that cannot be transmitted from the storage unit 23, and transmit the limitation information to the user equipment 100n.

The second transmission unit 22 is configured to transmit a control signal instructing the transmission of an uplink signal. For example, the second transmission unit 22 may be configured to transmit the "uplink scheduling grant" as a control signal via the PDCCH.

The second transmission unit 22 may execute processing such as receiving the limitation information that designates the configuration of the uplink signals that cannot be transmitted from the storage unit 23, and not transmitting a control signal that instructs the configuration of the uplink signals that cannot be transmitted based on the limitation information.

In other words, the second transmission unit 22 may execute processing such as receiving the limitation information that designates the configuration of the uplink signals that cannot be transmitted from the storage unit 23, and transmitting a control signal that instructs the configuration of the uplink signals that can be transmitted based on the limitation information.

In this case, although the transmission of the uplink is instructed in relation to the user equipment 100n by the uplink scheduling grant, the system efficiency can be enhanced by preventing the occurrence of a situation in which the transmission of the uplink is not executed due to limitation information.

The information contained in the control signal may be at least one of the number of transmitting carriers that configures the uplink signal, the transmission bandwidth of the uplink signal, the modulation method of the uplink signal, and the transmission frequency of the uplink signal.

The information contained in the limitation information may be at least one of the number of transmitting carriers that configures the uplink signal, the transmission bandwidth of the uplink signal, the modulation method of the uplink signal, and the transmission frequency of the uplink signal, the transmission power of the uplink signal, the channel type of the uplink signal, the signal type of the uplink signal, and standards related to spurious radiations to be satisfied.

The transmission bandwidth may be designated as the number of resource blocks. One resource block transmission bandwidth in an LTE scheme or LTE-advanced scheme is 180 kHz, and the transmission bandwidth is uniquely determined by the designation of the number of the resource blocks.

The transmission frequency may be designated as a position of the resource blocks. Generally, since the information designating the central frequency of the system band, or the frequency of the system band is notified to the user equipment in the form of broadcast information or the like, the transmission frequency of uplink signals is uniquely determined by the designation of the position of the resource block in the system band in relation to the uplink transmission signal.

When the uplink scheduling grant designates two or more as the number of transmission carriers that configure the uplink signal, multicarrier transmission is executed in the uplink.

In this case, one uplink scheduling grant may designate multicarrier transmission, or two or more uplink scheduling grants may instruct multicarrier transmission.

When two or more uplink scheduling grants instruct multicarrier transmission, one uplink scheduling grant may be assigned to the respective carrier transmissions.

In an uplink, by the uplink scheduling grant, an uplink transmission is triggered, PUCCH transmits CQI/PMI (Pre-Coding Matrix Indicator)/RI (Rank Indicator), ACK/NACK is transmitted as transmission confirmation information to PDSCH, transmission of the periodic uplink signal, or transmission of the uplink signal that triggers downlink transmission.

The uplink multicarrier transmission according to the present invention is not limited to multicarrier transmission in which the transmission instruction for an uplink signal is triggered by the uplink scheduling grant, but also includes transmission of an uplink signal in which the transmission instruction for an uplink signal is triggered by the uplink scheduling grant, transmission of a periodic uplink signal, or a multicarrier transmission by combination of transmission of the uplink signal triggering downlink transmission.

The above combination may include a multicarrier transmission by transmission of a plurality of periodic uplink signals, and multicarrier transmission by transmission of an uplink signal that triggers a plurality of downlink transmissions.

The first transmission unit 21 may be configured by a transmission carrier number that configures the uplink signal of two or more, and may be configured to transmit limitation information that designates a configuration in which the transmission bandwidth of the uplink signal is less than or equal to a predetermined threshold value as the configuration of an uplink signal that cannot be transmitted.

The storage unit 23 is configured to store information related to the configuration of the uplink signal that cannot be transmitted.

For example, the storage unit 23 may be configured to store information related to the configuration of the uplink signals that cannot be transmitted that are determined in advance. For example, information related to the configuration of the uplink signals that cannot be transmitted that are determined in advance may be defined as part of the operation of the user equipment in the standard used for regulating the operation of the user equipment in a mobile communication system.

Alternatively, the storage unit 23 may be configured to store information related to the configuration of uplink signals that cannot be transmitted that are notified by an RRC message from the user equipment 100n. In this case, the storage unit 23 receives the limitation information from the reception unit 24.

The reception unit 24 receives the limitation information when the limitation information is sent from the user equipment 100n to designate the configuration of the uplink signals that cannot be transmitted. The reception unit 24 then notifies the storage unit 23 of the limitation information.

The limitation information, for example, may be notified by an RRC message. More specifically, it may be transmitted as part of the "UE capability", or may be transmitted as information that differs from the "UE capability".

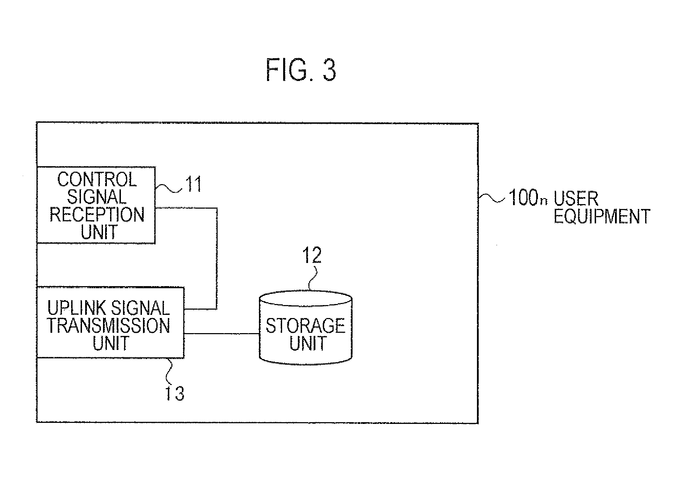

As illustrated in Fig. 3, the user equipment 100n includes a control signal reception unit 11, a storage unit 12, and an uplink signal transmission unit 13.

The control signal reception unit 11 is configured to receive a control signal that instructs the transmission of the uplink signal (more specifically, the data signal transmitted via the PUSCH).

More specifically, the control signal reception unit 11 may be configured to receive the "uplink scheduling grant" as a control signal via the PDCCH.

The resulting control signal may include at least one parameter selected from the transmission bandwidth of the uplink signal, the modulation method of the uplink signal, and the transmission frequency of the uplink signal.

When the uplink signal is configured by two or more transmission carriers, the control signal may include at least one parameter selected from the respective transmission bandwidth of the two or more transmission carriers, the respective modulation method of the two or more transmission carriers, and the respective transmission frequency of the two or more transmission carriers.

The storage unit 12 is configured to store information related to the configuration of the uplink signals that cannot be transmitted.

For example, the storage unit 12 may be configured to store information related to the configuration of the uplink signals that cannot be transmitted that have been notified by means of broadcast information or an RRC message from the base station device 200.

In other words, the storage unit 12 may be configured to receive an RRC message or broadcast information transmitted from the base station device 200, and store information related to the configuration of the uplink signals that cannot be transmitted that are contained in the RRC message or the broadcast information.

Alternatively, instead of configuring the storage unit 12 to receive an RRC message or broadcast information transmitted from the base station device 200, and store information related to the configuration of the uplink signals that cannot be transmitted that are contained in the RRC message or the broadcast information, the processing of receiving an RRC message or broadcast information may be executed by a functional unit other than the storage unit 12 in the user equipment 100n, and the storage unit 12 may be configured to store information related to the configuration of the uplink signals that cannot be transmitted contained in the RRC message or the broadcast information.

Alternatively, the storage unit 12 may be configured to store information related to the configuration of the uplink signals that cannot be transmitted that have been determined with reference to the capability of the user equipment 100n.

Alternatively, the storage unit 12 may be configured to store information related to the configuration of the uplink signals that cannot be transmitted that are determined in advance. For example, information related to the configuration of the uplink signals that cannot be transmitted that are determined in advance may be defined as a portion of the operation of the user equipment using the standard used for regulating the operation of the user equipment in a mobile communication system.

The uplink signal transmission unit 13 is configured to transmit an uplink signal to the base station device 200 based on the control signal received by the control signal reception unit 11. The resulting control signal is an uplink scheduling grant as described above.

The uplink signal transmission unit 13 as described hereafter may transmit limitation information designating the configuration of the uplink signals that cannot be transmitted to the base station device 200 as the "UE capability".

In this case, the limitation information designating the configuration of the uplink signals that cannot be transmitted may be held in the storage unit 12, and given from the storage unit 12 to the uplink signal transmission unit 13 when the uplink signal transmission unit 13 transmits the limitation information designating the configuration of the uplink signals that cannot be transmitted.

The uplink signal transmission unit 13 may be configured not to transmit an uplink signal when the information contained in the control signal matches the details that are designated in advance (that is to say, information related to the configuration of the uplink signals that cannot be transmitted that is stored in the storage unit 12).

In other words, the uplink signal transmission unit 13 may be configured to transmit an uplink signal when the information contained in the control signal does not match the details that are designated in advance (that is to say, information related to the configuration of the uplink signals that cannot be transmitted that is stored in the storage unit 12), in other words, when the information contained in the control signal matches the information related to the configuration of the uplink signals that can be transmitted.

For example, when a transmission carrier number that configures the uplink signal contained in the control signal is two or more, and the transmission bandwidth of the uplink signal contained in the control signal is less than or equal to a predetermined threshold value, the uplink signal transmission unit 13 may be configured not to transmit the uplink signal, that is to say, not to execute multicarrier transmission.

When a transmission carrier number that configures the uplink signal contained in the control signal is two or more, the transmission bandwidth of the uplink signal contained in the control signal is less than or equal to a predetermined threshold value, and a difference in transmission frequency of the two or more transmission carriers that configure the uplink signal contained in the control signal is greater than or equal to a predetermined threshold value, the uplink signal transmission unit 13 may be configured not to transmit the uplink signal, that is to say, not to execute multicarrier transmission.

When a transmission carrier number that configures the uplink signal contained in the control signal is two or more, the transmission bandwidth of the uplink signal contained in the control signal is less than or equal to a predetermined threshold value, and the two or more transmission carriers that configure the uplink signal contained in the control signal are signals in mutually different frequency bands, the uplink signal transmission unit 13 may be configured not to transmit the uplink signal, that is to say, not to execute multicarrier transmission.

Since the signals in different frequency bands are separated by frequencies, inter modulation products are produced in frequency areas that are more separated, and as a result, the adverse effect on another system is exacerbated. There is a possibility of avoiding such adverse effects by executing processing to avoid multicarrier transmission in different frequency bands as described above.

Alternatively, when a transmission carrier number that configures the uplink signal contained in the control signal is two or more, the transmission bandwidth of the uplink signal contained in the control signal is less than or equal to a predetermined threshold value, and the two or more transmission carriers that configure the uplink signal contained in the control signal are signals within the same frequency band, the uplink signal transmission unit 13 may be configured not to transmit the uplink signal, that is to say, not to execute multicarrier transmission.

The signals in different frequency bands are transmitted from different power amplifiers or antennas. In this case, when the power amplifiers or antennas are sufficiently separated, inter modulation products are not produced.

Conversely, when signals in the same frequency bands are transmitted from the same power amplifiers or antennas, inter modulation products are produced, and as a result, there is an adverse effect on another system. Therefore, there is a possibility of avoiding such adverse effects by executing processing to avoid multicarrier transmission in the same frequency bands as described above.

The frequency bands may be a different frequency bands. The frequency band in an LTE scheme or an LTE-advanced scheme is regulated by "5.5 Operating bands" in 3GPP TS36.101.

For example, the uplink frequency in Band1 is from 1920 MHz to 1980 MHz, and the uplink frequency in Band6 is from 830 MHz to 840 MHz.

In this case, when the transmission carrier having a central frequency of 1940 MHz (transmission carrier in Band1) and the transmission carrier having a central frequency of 835 MHz (transmission carrier in Band6) are transmitted at the same time, the two transmission carriers are regarded as signals within mutually different frequency bands.

Conversely, when the transmission carrier having a central frequency of 1940 MHz (transmission carrier in Band1) and the transmission carrier having a central frequency of 1960 MHz (transmission carrier in Band1) are transmitted at the same time, the two transmission carriers are regarded as signals within the same frequency band (frequency band).

The effect will be described below of configuring the uplink signal transmission unit 13 not to transmit an uplink signal when the information contained in the control signal matches the details that are designated in advance (that is to say, information related to the configuration of the uplink signals that cannot be transmitted that is stored in the storage unit 12).

As described above, the information related to the configuration of the uplink signals that cannot be transmitted is held in both the user equipment 100n and the base station device 200. In this case, there is a possibility of avoiding problems such as occurrence of interference with another system by not executing an instruction to transmit uplink signals that cannot be transmitted by the base station device 200.

However, the uplink scheduling grant includes an element termed a "false alarm", and notwithstanding the fact that the base station device 200 is not transmitting, the user equipment 100n may regard the uplink scheduling grant as transmitted from the base station device 200. In this case, multicarrier transmission unintended by the base station device 200 may be executed.

Consequently, also in the user equipment 100n, when the information contained in the control signal matches the information related to the configuration of the uplink signals that cannot be transmitted, there is a possibility of more accurately ensuring avoidance of interference with other systems by executing a processing in which the uplink signal is not transmitted.

The element termed as "false alarm" as described above, for example, is an element which is produced when a CRC bit that is imparted to the uplink scheduling grant is randomly in a state of OK. When the CRC bit is 16 bits, the corresponding probability is 1/216.

In the same manner as the uplink scheduling grant, downlink scheduling information may result in production of a false alarm. The false alarm for downlink scheduling information is a trigger for transmission of transmission confirmation information for a shared channel that corresponds to the downlink scheduling information in an uplink.

Instead of the uplink signal transmission unit 13 executing processing of not transmitting an uplink signal when the information contained in the control signal matches the details that are designated in advance (that is to say, information related to the configuration of the uplink signals that cannot be transmitted that is stored in the storage unit 12), an uplink signal may be transmitted based on a portion of the information contained in the control signal.

More specifically, when the transmission carrier number configuring the uplink signal contained in the control signal is at least two, the uplink signal may be transmitted using only one transmission carrier of the above two or more transmission carriers.

In this case, a method of selecting one transmission carrier to perform transmission from the two or more transmission carriers described above may be a method in which selection is executed arbitrarily, may be a method in which the high priority transmission carrier is selected, or may be a method of selection of a transmission carrier which is defined as an "anchor carrier".

Herein, the level of priority may be notified by the control signal, that is to say, the uplink scheduling grant, or may be notified to the user equipment from the base station device by broadcast information or an RRC message.

Alternatively, the level of priority may be a predetermined level of priority. When the level of priority is notified by the uplink scheduling grant, the level of priority of each transmission carrier may be defined as the informational element of the uplink scheduling grant.

When the level of priority is notified to the user equipment from the base station device by broadcast information or an RRC message, the level of priority may be notified to each frequency band (frequency band), for example.

When the level of priority is a predetermined level of priority, for example, it may be a level of priority determined for each channel or for each type of signal. More specifically, ACK/NACK may be a level of priority with a higher level of priority than CQI or PUSCH, PUCCH may be a level of priority with a higher level of priority than PUSCH, and ACK/NACK may be a level of priority with a higher level of priority than the sounding reference signal (sounding RS).

The channels described above may include, for example, PUCCH, PRACH, and PUSCH. Furthermore, the above signals may include ACK/NACK, CQI, scheduling request, sounding RS, and the like.

The anchor carrier described above may be the main "component carrier" when communication is executed using two or more "component carriers". For example, the user equipment 100n may use the anchor carrier to execute processing by setting a channel, voice settings using the RRC message, or receiving broadcast information.

The detailed examples of limitation information designating the "configuration of the uplink signals that cannot be transmitted" as described above are illustrated below.

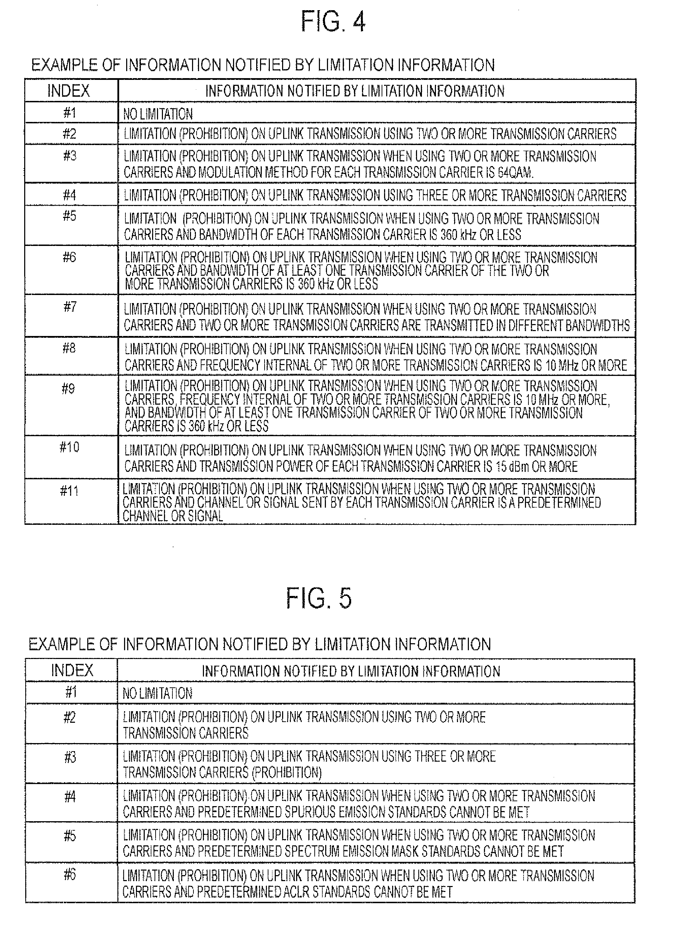

For example, as illustrated in Fig. 4, the "configuration of the uplink signals that cannot be transmitted" corresponding to each index may be predefined.

For example, an index #1 is an index that indicates that there is no limitation in relation to the multicarrier transmission with respect to the user equipment 100n.

When the limitation information that designates the configuration of the uplink signals that cannot be transmitted is index #1, the uplink signal transmission unit 13 of the user equipment 100n regards that there is no particular limitation, and executes multicarrier transmission, that is to say, executes the uplink transmission based on the uplink scheduling grant.

For example, an index #2 is an index that indicates that there is a limitation (prohibition) on the uplink transmission using two or more transmission carriers.

When the limitation information designating the configuration of the uplink signals that cannot be transmitted is the index #2, the uplink signal transmission unit 13 of the user equipment 100n does not transmit an uplink signal when uplink transmission using two or more transmission carriers is instructed.

For example, an index #3 is an index that indicates that transmission of the uplink signal is limited (prohibited) when the uplink transmission uses two or more transmission carriers, and the modulation method for each transmission carrier is 64QAM.

When the limitation information designating the configuration of the uplink signals that cannot be transmitted is the index #3, the uplink signal transmission unit 13 of the user equipment 100n does not transmit an uplink signal when the uplink transmission uses two or more transmission carriers, and transmission of the uplink signal is instructed in which the modulation method for each transmission carrier is 64QAM.

The value of 64QAM above is merely exemplary, and it may be QPSK, 16QAM, 8PSK, or the like. When the modulation method of at least one of the two or more transmission carriers is 64QAM, processing in which transmission of the uplink signal is not executed may be performed, and when the modulation method of all the transmission carriers of the two or more transmission carriers is 64QAM, processing in which transmission of the uplink signal is not executed may be performed.

For example, an index #4 is an index indicating that uplink transmission that uses three or more transmission carriers is limited (prohibited).

When the limitation information designating the configuration of the uplink signals that cannot be transmitted is the index #4, the uplink signal transmission unit 13 of the user equipment 100n does not transmit an uplink signal when there is an instruction for the uplink transmission using three or more transmission carriers.

The value of the number of transmission carriers of "2" or "3" with reference to the index #2 or #4 is merely exemplary, and other values may be used.

For example, an index #5 is an index indicating that an uplink transmission is limited (prohibited) when uplink transmission uses two or more transmission carriers, and the bandwidth of each transmission carrier is less than or equal to 360 kHz.

When the limitation information designating the configuration of the uplink signals that cannot be transmitted is the index #5, the uplink signal transmission unit 13 of the user equipment 100n does not transmit an uplink signal when uplink transmission uses two or more transmission carriers, and the bandwidth of each transmission carrier is less than or equal to 360 kHz.

The value of 360 kHz described above is merely exemplary, and values other than 360 kHz may be used. In substitution for 360 kHz, a value such as two resource blocks may be used. In an LTE scheme and an LTE-advanced scheme, the transmission bandwidth of one resource block is 180 kHz. In other words, a value other than 360 kHz may be used if it is a metric that enables designation of the dimension of the frequency band.

For example, an index #6 is an index indicating that the uplink transmission is limited (prohibited) when uplink transmission uses two or more transmission carriers, and the bandwidth of at least one transmission carrier of the two or more transmission carriers is less than or equal to 360 kHz.

When the limitation information designating the configuration of the uplink signals that cannot be transmitted is the index #6, the uplink signal transmission unit 13 of the user equipment 100n does not transmit an uplink signal when uplink transmission uses two or more transmission carriers, and the bandwidth of at least one transmission carrier of the two or more transmission carriers is less than or equal to 360 kHz.

The value of 360 kHz described above is merely exemplary, and values other than 360 kHz may be used. In substitution for 360 kHz, a value such as two resource blocks may be used. In an LTE scheme and an LTE-advanced scheme, the transmission bandwidth of one resource block is 180 kHz. In other words, a value other than 360 kHz may be used if it is a metric that enables designation of the dimension of the frequency band.

For example, an index #7 is an index indicating that the uplink transmission is limited (prohibited) when uplink transmission uses two or more transmission carriers, and the two or more transmission carriers are transmitted in different frequency bands.

When the limitation information designating the configuration of the uplink signals that cannot be transmitted is the index #7, the uplink signal transmission unit 13 of the user equipment 100n does not transmit an uplink signal when uplink transmission uses two or more transmission carriers, and the two or more transmission carriers are transmitted in different frequency bands.

For example, an index #8 is an index indicating that uplink transmission is limited (prohibited) when uplink transmission uses two or more transmission carriers, and the frequency interval between the two or more transmission carriers is at least 10 MHz.

When the limitation information designating the configuration of the uplink signals that cannot be transmitted is the index #8, the uplink signal transmission unit 13 of the user equipment 100n does not transmit an uplink signal when uplink transmission uses two or more transmission carriers, and the frequency interval between the two or more transmission carriers is at least 10 MHz. The value of 10 MHz described above is merely exemplary, and other values may be used.

For example, an index #9 is an index indicating that the uplink transmission is limited (prohibited) when uplink transmission uses two or more transmission carriers, the frequency interval of the two or more transmission carriers is more than or equal to 10 MHz, and the bandwidth of at least one transmission carrier of the two or more transmission carriers is less than or equal to 360 kHz.

When the limitation information designating the configuration of the uplink signals that cannot be transmitted is the index #9, the uplink signal transmission unit 13 of the user equipment 100n does not transmit an uplink signal when uplink transmission uses two or more transmission carriers, the frequency interval of the two or more transmission carriers is more than or equal to 10 MHz, and the bandwidth of at least one transmission carrier of the two or more transmission carriers is less than or equal to 360 kHz.

For example, an index #10 is an index indicating that the uplink transmission is limited (prohibited) when uplink transmission uses two or more transmission carriers, the frequency interval of the two or more transmission carriers is more than or equal to 10 MHz, and the transmission power of each transmission carrier is at least 15 dBm.

When the limitation information designating the configuration of the uplink signals that cannot be transmitted is the index #10, the uplink signal transmission unit 13 of the user equipment 100n does not transmit an uplink signal when uplink transmission uses two or more transmission carriers, and the transmission power of each transmission carrier is at least 15 dBm. The value of 15 dBm is merely exemplary, and other values may be used.

In other words, when the index #10 is used, the user equipment 100n regards that the configuration of the uplink signal will be the configuration of the uplink signals that cannot be transmitted when the transmission power of each transmission carrier is at least a predetermined threshold value, and may execute processing not to transmit the uplink signal.

For example, an index #11 is an index indicating that the uplink transmission is limited (prohibited) when uplink transmission uses two or more transmission carriers, and the signal or channel for transmission by each transmission carrier is a predetermined channel type or a predetermined signal type.

When the limitation information designating the configuration of the uplink signals that cannot be transmitted is the index #11, the uplink signal transmission unit 13 of the user equipment 100n does not transmit an uplink signal when uplink transmission uses two or more transmission carriers, and the signal or channel for transmission by each transmission carrier is a predetermined channel type or a predetermined signal type.

A predetermined channel type, for example, is PUCCH, PUSCH, PRACH, or the like. A predetermined signal type is CQI or ACK/NACK, scheduling request, sounding RS, or the like.

More specifically, for example, when PUCCH is transmitted with one transmission carrier, and PUSCH is transmitted with the other transmission carrier of the two transmission carriers, a configuration of the uplink signals that cannot be transmitted is regarded, and processing may be executed not to transmit the uplink signal.

In other words, when the index #11 is used, the user equipment 100n regards that the configuration of the uplink signal will be the configuration of the uplink signals that cannot be transmitted when the signal or channel for transmission by each transmission carrier is a predetermined channel type or a predetermined signal type, and may execute processing not to transmit the uplink signal.

That is to say, as illustrated in Fig. 4, the index may be defined based on information related to at least one of the number of transmission carriers, the transmission power of each transmission carrier, the transmission bandwidth, the transmission frequency, the transmission power, or the channel type or signal type used during transmission.

Alternatively, as illustrated in Fig. 5, "the configuration of the uplink signals that cannot be transmitted" corresponding to each index may be defined in advance.

Since the index #1, the index #2, and the index #3 in Fig. 5 are the same as the index #1, the index #2, and the index #3 in Fig. 4, description thereof will be omitted.

For example, the index #4 is an index showing that uplink transmission is limited (prohibited) when uplink transmission uses two or more transmission carriers, and predetermined spurious emission standards cannot be satisfied.

When the limitation information designating the configuration of the uplink signals that cannot be transmitted is the index #4, the uplink signal transmission unit 13 of the user equipment 100n does not transmit an uplink signal when uplink transmission uses two or more transmission carriers, and predetermined spurious emission standards cannot be satisfied. The spurious emission standards may be, for example, spurious emission standards in relation to a PHS system.

For example, an index #5 is an index indicating that the uplink transmission is limited (prohibited) when uplink transmission uses two or more transmission carriers, and predetermined spectrum emission mask standards cannot be satisfied.

When the limitation information designating the configuration of the uplink signals that cannot be transmitted is the index #5, the uplink signal transmission unit 13 of the user equipment 100n does not transmit an uplink signal when uplink transmission uses two or more transmission carriers, and predetermined spectrum emission mask standards cannot be satisfied.

For example, an index #6 is an index indicating that the uplink transmission is limited (prohibited) when uplink transmission uses two or more transmission carriers, and predetermined ACLR (Adjacent Carrier Leakage Ratio) standards cannot be satisfied.

When the limitation information designating the configuration of the uplink signals that cannot be transmitted is the index #6, the uplink signal transmission unit 13 of the user equipment 100n does not transmit an uplink signal when uplink transmission uses two or more transmission carriers, and the predetermined ACLR standards cannot be satisfied.

That is to say, as illustrated in Fig. 5, the index may be defined based on information related to at least one of the number of transmission carriers, the standards for spurious radiation to be satisfied, that is to say, the spurious emission standards, the spectrum emission mask standards, and the ACLR standards.

In the above example, although the required standards include the spurious emission standards, the spectrum emission mask standards, and the ACLR standards, standards relating to downlink receiving sensitivity may be substituted.

Therefore, it is possible to avoid the unnecessary waves caused in the uplink signal that degrade the downlink receiving sensitivity due to self-interference in an inner portion of the mobile equipment, that is to say, self interference, or de-sense.

Alternatively, an index may be defined by combination of the information in Fig. 4 and Fig. 5. In other words, the index may be defined based on information related to at least one of the number of transmission carriers, the transmission power of each transmission carrier, the transmission bandwidth, the transmission frequency, the transmission power, the channel type or signal type used during transmission, or the standards for spurious radiations to be satisfied.

The indexes described above and information corresponding to each index may be held as predetermined information in the user equipment 100n and the base station device 200.

Alternatively, only information corresponding to each index may be held as predetermined information in the user equipment 100n and the base station device 200, and the indexes described above may be notified by broadcast information or an RRC message to the user equipment 100n from the base station device 200.

The indexes described above and information corresponding to each index are merely exemplary, and any configuration of signaling may be employed as long as the limitation information designating the configuration of the uplink signals that cannot be transmitted is notified.

Alternatively, only information corresponding to each index may be held as predetermined information in the user equipment 100n and the base station device 200, and the indexes described above may be notified by an RRC message from the user equipment 100n to the base station device 200.

The indexes described above and information corresponding to each index are merely exemplary, and any configuration of signaling may be employed as long as the limitation information designating the configuration of the uplink signals that cannot be transmitted is notified.

### (Operation of Mobile Communication System according to First Embodiment of Present Invention)

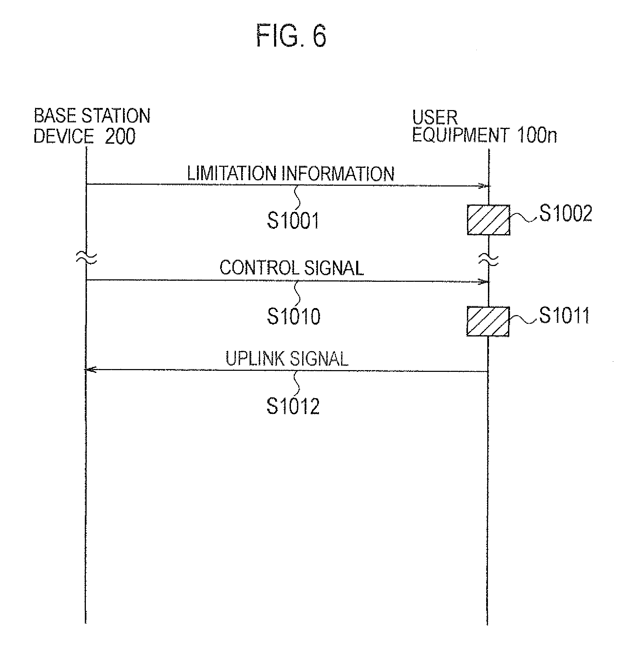

The operation of a mobile communication system according to a first embodiment of the present invention will be described making reference to Fig. 6.

As illustrated in Fig. 6, in step S1001, the base station device 200 transmits limitation information designating the configuration of the uplink signals that cannot be transmitted to the user equipment 100n, and in step S1002, the user equipment 100n stores the information designating the configuration of the uplink signals that cannot be transmitted in the storage unit 12 based on the limitation information.

In step S1010, the base station device 200 transmits a control signal (uplink scheduling grant) via the PDCCH to the user equipment 100n to be scheduled.

In step S1011, the user equipment 100n determines whether or not the information contained in the control signal matches the predetermined details (that is to say, the information related to the configuration of the uplink signals that cannot be transmitted stored in the storage unit 12).

When the user equipment 100n determines that the information contained in the control signal does not match the predetermined details (that is to say, the information related to the configuration of the uplink signals that cannot be transmitted stored in the storage unit 12), in step S1012, an uplink signal is transmitted via the PUSCH using a resource assigned by the control signal (uplink scheduling grant).

For example, when the number of transmission carriers configuring the uplink signal contained in the control signal is two or more, the user equipment 100n may transmit an uplink signal by multicarrier transmission when the transmission bandwidth of the uplink signal contained in the control signal is not less than or equal to a predetermined threshold value.

Furthermore, when the number of transmission carriers configuring the uplink signal contained in the control signal is two or more, the user equipment 100n may transmit an uplink signal by multicarrier transmission when the transmission bandwidth of the uplink signal contained in the control signal is not less than or equal to a predetermined threshold value, or when the difference in the transmission frequency of the two or more transmission carriers configuring the uplink signal contained in the control signal is not greater than or equal to a predetermined threshold value.

When the number of transmission carriers configuring the uplink signal contained in the control signal is two or more, the user equipment 100n may transmit an uplink signal by multicarrier transmission when the transmission bandwidth of the uplink signal contained in the control signal is not less than or equal to a predetermined threshold value, or when the two or more transmission carriers configuring the uplink signal contained in the control signal are not signal in different frequency bands.

On the other hand, when the user equipment 100n determines that the information contained in the control signal matches the predetermined details (that is to say, the information related to the configuration of the uplink signals that cannot be transmitted stored in the storage unit 12), an uplink signal is not transmitted via the PUSCH using a resource assigned by the control signal (uplink scheduling grant).

For example, when the number of transmission carriers configuring the uplink signal contained in the control signal is two or more, and the transmission bandwidth of the uplink signal contained in the control signal is less than or equal to a predetermined threshold value, the user equipment 100n does not transmit an uplink signal, in other words, multicarrier transmission may not be performed.

For example, when the number of transmission carriers configuring the uplink signal contained in the control signal is two or more, the transmission bandwidth of the uplink signal contained in the control signal is less than or equal to a predetermined threshold value, and the difference in the transmission frequency of the two or more transmission carriers configuring the uplink signal contained in the control signal is greater than or equal to a predetermined threshold value, the user equipment 100n does not transmit an uplink signal, in other words, multicarrier transmission may not be performed.

Furthermore, when the number of transmission carriers configuring the uplink signal contained in the control signal is two or more, the transmission bandwidth of the uplink signal contained in the control signal is less than or equal to a predetermined threshold value, and the two or more transmission carriers configuring the uplink signal contained in the control signal are signals in different frequency bands, the user equipment 100n does not transmit an uplink signal, in other words, multicarrier transmission may not be performed.

The processing in step S1001 may not be executed in the processing in steps S1001, S1002, S1010, S1011, and S1012 as described above. For example, the user equipment 100n holds the predetermined limitation information, and in step S1002, information related to the configuration of uplink signals that cannot be transmitted may be stored in the storage unit 12 based on the predetermined limitation information.

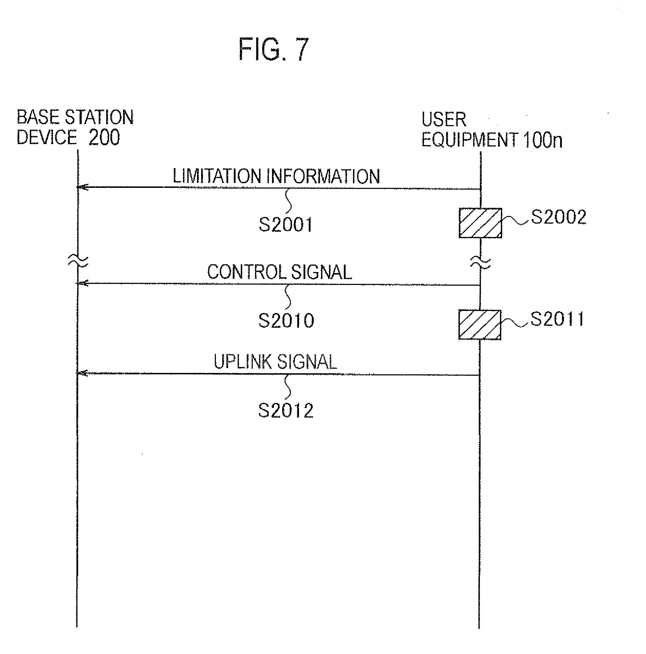

Another aspect of the operation of the mobile communication system according to a first embodiment of the present invention will be described making reference to Fig. 7.

In Fig. 6, although the base station device 200 transmits limitation information designating the configuration of uplink signals that cannot be transmitted to the user equipment 100n, in Fig. 7, the limitation information designating the configuration of uplink signals that cannot be transmitted is transmitted to the base station device 200 by the user equipment 100n.

As illustrated in Fig. 7, in step S2001, the user equipment 100n transmits limitation information designating the configuration of uplink signals that cannot be transmitted to the base station device 200.

In step S2002, the user equipment 100n stores information related to the configuration of uplink signals that cannot be transmitted in the storage unit 12 based on the limitation information transmitted to the base station device 200.

Since the description of step S2010, step S2011, and step S2012 is the same as that related to step S1010, step S1011, and step S1012, description will not be repeated.

The limitation information designating the configuration of uplink signals that cannot be transmitted described above may be transmitted as part of the "UE capability", or may be transmitted as information different from the "UE capability".

Generally, there are user equipments that may, or may not, be able to include installation of a high-cost power amplifier to satisfy ACLR standards or spurious emission standards due to the fact there are configurations that apply rigorous requirements in relation to the terminal cost and the battery life or the size such as a handset, and there are configurations that apply low requirements in relation to the terminal cost and the battery life, or the size, such as communication devices built in PCs.

Therefore it is possible to provide optimal communication in relation to a variety of requirements as described above by notifying the limitation information designating the configuration of uplink signals that cannot be transmitted from the user equipment to the base station device on the basis of "UE capability".

In other words, communication using an LTE-advanced scheme can be used even in relation to a low-cost power amplifier by prohibiting multicarrier transmission in relation to a terminal that applies rigorous requirements in relation to the cost, size, or battery life such as a handset. Multicarrier transmission can be enabled in relation to a terminal that applies rigorous requirements in relation to the cost, size, or battery life such as a terminal built in a PC. In this manner, improvement of a transmission characteristic including increased throughput by multicarrier transmission can be enabled.

As described above, the cost and size of the terminal determine whether or not multicarrier transmission is possible. Therefore, a certain terminal may be able to execute multicarrier transmission while satisfying ACLR, SEM or the spurious emission standards, but another terminal may not satisfy ACLR, SEM or the spurious emission standards when executing multicarrier transmission.

In the above case, the operation described above as "When it is determined that the information contained in the control signal matches the details that are designated in advance (that is to say, information related to the configuration of the uplink signals that cannot be transmitted), an uplink signal is not transmitted" may be an operation in which an uplink signal does not need to be transmitted.

In the above case, the mobile station must satisfy the standards for ACLR, SEM or the spurious emission when transmitting an uplink signal, that is to say, when executing multicarrier transmission.

### (Operation and Effect of Mobile Communication System according to First Embodiment of the Present Invention)

According to the mobile communication system in a first embodiment of the present invention, a user equipment 100n is configured not to transmit an uplink signal when it is determined that the information contained in the control signal matches the details that are designated in advance (that is to say, information related to the configuration of the uplink signals), in other words, is configured not to execute multicarrier communication. Consequently, interference with another system can be reduced, and an increase effect on transmission characteristic by multicarrier transmission is possible.

It is possible to provide a mobile communication system in which interference with another system can be reduced using a method adapted to each region or each country by notifying limitation information, that is to say, information related to the configuration of uplink signals that cannot be transmitted by means of broadcast information or RRC messages, and therefore which enables an increase effect on the transmission characteristic by multicarrier transmission.

The operation and effect will be described in detail below.

As described above, one object of the present invention is to realize an increase effect on the transmission characteristic by multicarrier transmission while reducing interference with another system. It is often the case that another system described above generally differs in relation to region or country.

For example, PHS systems are applied in Japan, but are not used in Europe or the United States. Therefore even when a PHS system undergoes interference as a result of execution of multicarrier transmission, in Europe or the United States, there is no need to consider a multicarrier transmission as a configuration of the uplink signal that cannot be transmitted. In other words, multicarrier transmission that will cause interference with a PHS system can be performed.

Conversely, in Japan where a PHS system is applied, there is a need to consider a multicarrier transmission as a configuration of the uplink signal that cannot be transmitted due to causing interference with PHS systems, that is to say, there is a need to prohibit multicarrier transmission that causes interference with PHS systems.

For the above reasons, it is possible to provide a mobile communication system in which interference with another system can be reduced using a method adapted to each region or each country by notifying limitation information as described above from a base station device 200 to a user equipment 100n by use of broadcast information or RRC messages, and therefore which enables an increase effect on the transmission characteristic by multicarrier transmission.

The characteristics of this embodiment as described above may be represented as follows.

A first characteristic of this embodiment is summarized in that a user equipment 100n configured to execute radio communication with a base station device 200 in a mobile communication system 1000 comprising, a control signal reception unit 11 configured to receive a control signal instructing transmission of an uplink signal and an uplink signal transmission unit 13 configured to transmit an uplink signal to the base station device 200 based on the control signal, the uplink signal transmission unit 13 is configured not to transmit the uplink signal when the information contained in the control signal matches predetermined details.

In the first characteristic of this embodiment, the predetermined details are at least one of a number of transmission carriers configuring the uplink signal, a transmission bandwidth of the uplink signal, a modulation method of the uplink signal, a transmission frequency of the uplink signal, a transmission power of the uplink signal, a channel type of the uplink signal, a signal type of the uplink signal, and standards related to spurious radiations to be satisfied.

The predetermined details correspond to the information notified by the limitation information described above. In other words, the predetermined details correspond to information related to the configuration of an uplink signal that cannot be transmitted.

In the first characteristic of this embodiment, the standards related to spurious radiations to be satisfied are at least one of spurious emission standards, spectrum emission mask standards, and ACLR standards.

In the first characteristic of this embodiment, the uplink signal transmission unit 13 is configured not to transmit the uplink signal when a transmission carrier number that configures the uplink signal contained in the control signal is two or more, and the transmission bandwidth of the uplink signal contained in the control signal is less than or equal to a predetermined threshold value.

In the first characteristic of this embodiment, the uplink signal transmission unit 13 is configured not to transmit the uplink signal when a transmission carrier number that configures the uplink signal contained in the control signal is two or more, the transmission bandwidth of the uplink signal contained in the control signal is less than or equal to a predetermined threshold value, and a difference in transmission frequency of the two or more transmission carriers that configure the uplink signal contained in the control signal is greater than or equal to a predetermined threshold value.

In the first characteristic of this embodiment, the uplink signal transmission unit 13 is configured not to transmit the uplink signal when a transmission carrier number that configures the uplink signal contained in the control signal is two or more, the transmission bandwidth of the uplink signal contained in the control signal is less than or equal to a predetermined threshold value, and the two or more transmission carriers that configure the uplink signal contained in the control signal are signals in mutually different frequency bands.

In the first characteristic of this embodiment, the uplink signal transmission unit 13 is configured not to transmit the uplink signal when a transmission carrier number that configures the uplink signal contained in the control signal is two or more, the transmission bandwidth of the uplink signal contained in the control signal is less than or equal to a predetermined threshold value, and the two or more transmission carriers that configure the uplink signal contained in the control signal are signals in the same frequency band.

In the first characteristic of this embodiment, the uplink signal is at least one selected from an uplink signal by an uplink scheduling grant, a periodic uplink signal, and an uplink signal triggering a downlink transmission.

In the first characteristic of this embodiment, the predetermined details are notified from the base station device 200 by an RRC message or broadcast information.

In the first characteristic of this embodiment, the predetermined details are determined by the capability of the user equipment 100n.

In the first characteristic of this embodiment, the predetermined details are notified to the base station device 200.

A second characteristic of this embodiment is summarized in that a user equipment 100n configured to execute radio communication with a base station device 200 in a mobile communication system 1000 comprising, a control signal reception unit 11 configured to receive a control signal instructing transmission of an uplink signal and an uplink signal transmission unit 13 configured to transmit an uplink signal to the base station device 200 based on the control signal, the uplink signal transmission unit 13 is configured to transmit a part of the uplink signal when the information contained in the control signal matches predetermined details.

In the second characteristic of this embodiment, the predetermined details are at least one of a number of transmission carriers configuring the uplink signal, a transmission bandwidth of the uplink signal, a modulation method of the uplink signal, a transmission frequency of the uplink signal, a transmission power of the uplink signal, a channel type of the uplink signal, a signal type of the uplink signal, and standards related to spurious radiations to be satisfied.

The predetermined details correspond to the information notified by the limitation information described above. In other words, the predetermined details correspond to information related to the configuration of an uplink signal that cannot be transmitted.

In the second characteristic of this embodiment, the standards related to spurious radiations to be satisfied are at least one of spurious emission standards, spectrum emission standards, and ACLR standards.

In the second characteristic of this embodiment, the uplink signal transmission unit 13 is configured to transmit a part of the uplink signal when a transmission carrier number that configures the uplink signal contained in the control signal is two or more, and the transmission bandwidth of the uplink signal contained in the control signal is less than or equal to a predetermined threshold value.

In the second characteristic of this embodiment, the uplink signal transmission unit 13 is configured to transmit a part of the uplink signal when a transmission carrier number that configures the uplink signal contained in the control signal is two or more, and the transmission bandwidth of the uplink signal contained in the control signal is less than or equal to a predetermined threshold value, and a difference in transmission frequency of the two or more transmission carriers that configure the uplink signal contained in the control signal is greater than or equal to a predetermined threshold value.

In the second characteristic of this embodiment, the uplink signal transmission unit 13 is configured to transmit a part of the uplink signal when a transmission carrier number that configures the uplink signal contained in the control signal is two or more, the transmission bandwidth of the uplink signal contained in the control signal is less than or equal to a predetermined threshold value, and the two or more transmission carriers that configure the uplink signal contained in the control signal are signals in mutually different frequency bands.

In the second characteristic of this embodiment, the uplink signal transmission unit 13 is configured to transmit a part of the uplink signal when a transmission carrier number that configures the uplink signal contained in the control signal is two or more, the transmission bandwidth of the uplink signal contained in the control signal is less than or equal to a predetermined threshold value, and the two or more transmission carriers that configure the uplink signal contained in the control signal are signals in the same frequency band.

In the second characteristic of this embodiment, the uplink signal is at least one selected from an uplink signal by an uplink scheduling grant, a periodic uplink signal, and an uplink signal triggering a downlink transmission.

In the second characteristic of this embodiment, the predetermined details are notified from the base station device 200 by an RRC message or broadcast information.

In the second characteristic of this embodiment, the predetermined details are determined by the capability of the user equipment 100n.

In the second characteristic of this embodiment, the predetermined details are notified to the base station device 200.

A third characteristic of this embodiment is summarized in that a base station device 200 configured to execute radio communication with a user equipment 100n in a mobile communication system 1000 comprising, a first transmission unit 21 configured to transmit limitation information designating the configuration of an uplink signal that cannot be transmitted to the user equipment 100n and a second transmission unit 22 configured to transmit a control signal instructing transmission of the uplink signal.

In the third characteristic of this embodiment, the limitation information designating the configuration of an uplink signal that cannot be transmitted is at least one of a number of transmission carriers configuring the uplink signal, a transmission bandwidth of the uplink signal, a modulation method of the uplink signal, a transmission frequency of the uplink signal, a transmission power of the uplink signal, a channel type of the uplink signal, a signal type of the uplink signal, and standards related to spurious radiations to be satisfied.

In the third characteristic of this embodiment, the first transmission unit 21 is configured to transmit limitation information designating a configuration in which the number of transmission carriers configuring the uplink signal is two or more, and the transmission bandwidth of the uplink signal is less than or equal to a predetermined threshold value as a configuration of an uplink signal that cannot be transmitted.

A fourth characteristic of this embodiment is summarized in that a communication control method configured to control radio communication between a base station device 200 and a user equipment 100n in a mobile communication system 1000, the method comprising, a step A of receiving a control signal instructing transmission of an uplink signal and a step B of transmitting an uplink signal to the base station device 200 based on the control signal, in the step B, the uplink signal is not transmitted when the information contained in the control signal matches predetermined details.

A fifth characteristic of this embodiment is summarized in that a communication control method configured to control radio communication between a base station device 200 and a user equipment 100n in a mobile communication system 1000, the method comprising, a step A of receiving a control signal instructing transmission of an uplink signal and a step B of transmitting an uplink signal to the base station device 200 based on the control signal and in the step B, a part of the uplink signal is transmitted when the information contained in the control signal matches predetermined details.

The uplink multicarrier transmission according to the present invention is not limited to multicarrier transmission in which the transmission instruction for an uplink signal is triggered by the uplink scheduling grant, but also includes transmission of an uplink signal in which the transmission instruction for an uplink signal is triggered by the uplink scheduling grant, transmission of a periodic uplink signal, or multicarrier transmission by combination a transmission of the uplink signal triggering a downlink transmission.

The transmission of a periodic uplink signal may include a periodic CQI transmission, a sounding RS transmission, or a scheduling request transmission. The transmission of the uplink signal triggering a downlink transmission may include an ACK/NACK signal transmission that is transmission confirmation information sent to the PDSCH.

Note that operation of the above described the user equipment 100n and the base station device 200 may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the user equipment 100n and the base station device 200. Also, the storage medium and the processor may be provided in the user equipment 100n and the base station device 200 as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

## Claims

1. A user equipment configured to execute radio communication with a base station device in a mobile communication system comprising:
a control signal reception unit configured to receive a control signal instructing transmission of an uplink signal; and
an uplink signal transmission unit configured to transmit an uplink signal to the base station device based on the control signal, wherein
the uplink signal transmission unit is configured not to transmit the uplink signal when the information contained in the control signal matches predetermined details.

2. The user equipment according to claim 1, wherein
the predetermined details are at least one of a number of transmission carriers configuring the uplink signal, a transmission bandwidth of the uplink signal, a modulation method of the uplink signal, a transmission frequency of the uplink signal, a transmission power of the uplink signal, a channel type of the uplink signal, a signal type of the uplink signal, and standards related to spurious radiations to be satisfied.

3. The user equipment according to claim 2, wherein the standards related to spurious radiations to be satisfied are at least one of spurious emission standards, spectrum emission mask standards, and ACLR standards.

4. The user equipment according to claim 2, wherein
the uplink signal transmission unit is configured not to transmit the uplink signal when a transmission carrier number that configures the uplink signal contained in the control signal is two or more, and the transmission bandwidth of the uplink signal contained in the control signal is less than or equal to a predetermined threshold value.

5. The user equipment according to claim 2, wherein
the uplink signal transmission unit is configured not to transmit the uplink signal when a transmission carrier number that configures the uplink signal contained in the control signal is two or more, the transmission bandwidth of the uplink signal contained in the control signal is less than or equal to a predetermined threshold value, and a difference in transmission frequency of the two or more transmission carriers that configure the uplink signal contained in the control signal is greater than or equal to a predetermined threshold value.

6. The user equipment according to claim 2, wherein
the uplink signal transmission unit is configured not to transmit the uplink signal when a transmission carrier number that configures the uplink signal contained in the control signal is two or more, the transmission bandwidth of the uplink signal contained in the control signal is less than or equal to a predetermined threshold value, and the two or more transmission carriers that configure the uplink signal contained in the control signal are signals in mutually different frequency bands.

7. The user equipment according to claim 1 wherein the predetermined details are notified from the base station device by an RRC message or broadcast information.

8. The user equipment according to claim 1 wherein the predetermined details are determined by the capability of the user equipment.

9. The user equipment according to claim 1 wherein the predetermined details are notified to the base station device.

10. A user equipment configured to execute radio communication with a base station device in a mobile communication system comprising:
a control signal reception unit configured to receive a control signal instructing transmission of an uplink signal; and
an uplink signal transmission unit configured to transmit an uplink signal to the base station device based on the control signal, wherein
the uplink signal transmission unit is configured to transmit a part of the uplink signal when the information contained in the control signal matches predetermined details.

11. The user equipment according to claim 10, wherein the predetermined details are at least one of a number of transmission carriers configuring the uplink signal, a transmission bandwidth of the uplink signal, a modulation method of the uplink signal, a transmission frequency of the uplink signal, a transmission power of the uplink signal, a channel type of the uplink signal, a signal type of the uplink signal, and standards related to spurious radiations to be satisfied.

12. The user equipment according to claim 11, wherein the standards related to spurious radiations to be satisfied are at least one of spurious emission standards, spectrum emission standards, and ACLR standards.

13. The user equipment according to claim 11, wherein
the uplink signal transmission unit is configured to transmit a part of the uplink signal when a transmission carrier number that configures the uplink signal contained in the control signal is two or more, and the transmission bandwidth of the uplink signal contained in the control signal is less than or equal to a predetermined threshold value.

14. The user equipment according to claim 11, wherein
the uplink signal transmission unit is configured to transmit a part of the uplink signal when a transmission carrier number that configures the uplink signal contained in the control signal is two or more, the transmission bandwidth of the uplink signal contained in the control signal is less than or equal to a predetermined threshold value, and a difference in transmission frequency of the two or more transmission carriers that configure the uplink signal contained in the control signal is greater than or equal to a predetermined threshold value.

15. The user equipment according to claim 11, wherein
the uplink signal transmission unit is configured to transmit a part of the uplink signal when a transmission carrier number that configures the uplink signal contained in the control signal is two or more, the transmission bandwidth of the uplink signal contained in the control signal is less than or equal to a predetermined threshold value, and the two or more transmission carriers that configure the uplink signal contained in the control signal are signals in mutually different frequency bands.

16. The user equipment according to claim 10 wherein the predetermined details are notified from the base station device by an RRC message or broadcast information.

17. The user equipment according to claim 10 wherein the predetermined details are determined by the capability of the user equipment.

18. The user equipment according to claim 10 wherein the predetermined details are notified to the base station device.

19. A base station device configured to execute radio communication with a user equipment in a mobile communication system comprising:
a first transmission unit configured to transmit limitation information designating the configuration of an uplink signal that cannot be transmitted to the user equipment; and
a second transmission unit configured to transmit a control signal instructing transmission of the uplink signal.

20. The base station device according to claim 19, wherein
the limitation information designating the configuration of an uplink signal that cannot be transmitted is at least one of a number of transmission carriers configuring the uplink signal, a transmission bandwidth of the uplink signal, a modulation method of the uplink signal, a transmission frequency of the uplink signal, a transmission power of the uplink signal, a channel type of the uplink signal, a signal type of the uplink signal, and standards related to spurious radiations to be satisfied.

21. The base station device according to claim 20 wherein
the first transmission unit is configured to transmit limitation information designating a configuration in which the number of transmission carriers configuring the uplink signal is two or more, and the transmission bandwidth of the uplink signal is less than or equal to a predetermined threshold value as a configuration of an uplink signal that cannot be transmitted.

22. A communication control method configured to control radio communication between a base station device and a user equipment in a mobile communication system, the method comprising:
a step A of receiving a control signal instructing transmission of an uplink signal; and
a step B of transmitting an uplink signal to the base station device based on the control signal, wherein
in the step B, the uplink signal is not transmitted when the information contained in the control signal matches predetermined details.

23. A communication control method configured to control radio communication between a base station device and a user equipment in a mobile communication system, the method comprising:
a step A of receiving a control signal instructing transmission of an uplink signal; and
a step B of transmitting an uplink signal to the base station device based on the control signal; and wherein
in the step B, a part of the uplink signal is transmitted when the information contained in the control signal matches predetermined details.

24. The user equipment according to claim 2, wherein the uplink signal transmission unit is configured not to transmit the uplink signal when a transmission carrier number that configures the uplink signal contained in the control signal is two or more, the transmission bandwidth of the uplink signal contained in the control signal is less than or equal to a predetermined threshold value, and the two or more transmission carriers that configure the uplink signal contained in the control signal are signals in the same frequency band.

25. The user equipment according to claim 1, wherein the uplink signal is at least one selected from an uplink signal by an uplink scheduling grant, a periodic uplink signal, and an uplink signal triggering a downlink transmission.

26. The user equipment according to claim 10, wherein the uplink signal transmission unit is configured to transmit a part of the uplink signal when a transmission carrier number that configures the uplink signal contained in the control signal is two or more, the transmission bandwidth of the uplink signal contained in the control signal is less than or equal to a predetermined threshold value, and the two or more transmission carriers that configure the uplink signal contained in the control signal are signals in the same frequency band.

27. The user equipment according to claim 10, wherein the uplink signal is at least one selected from an uplink signal by an uplink scheduling grant, a periodic uplink signal, and an uplink signal triggering a downlink transmission.
